# EUROPÄISCHE PATENTSCHRIFT

(11) **EP 4 076 269 B1**
(45) Veröffentlichungstag und Bekanntmachung des Hinweises auf die Patenterteilung: **15.05.2024**
(21) Anmeldenummer: 20816180.2
(22) Anmeldetag: 03.12.2020
(51) Int. Cl.: A61C 13/00, A61C 13/09

(54) **VERFAHREN ZUR DEFINITION MINDESTENS EINER GRENZFLÄCHE IM INNEREN EINES KÜNSTLICHEN ZAHNELEMENTS**
METHOD FOR DEFINING AT LEAST ONE INTERFACE WITHIN AN ARTIFICIAL DENTAL ELEMENT
PROCÉDÉ DE DÉFINITION D'AU MOINS UNE INTERFACE À L'INTÉRIEUR D'UN ÉLÉMENT DE DENTURE ARTIFICIEL

(30) Priorität: 18.12.2019 EP 19217393
(43) Veröffentlichungstag der Anmeldung: 26.10.2022
(73) Patentinhaber: VITA-ZAHNFABRIK H. Rauter GmbH & Co. KG, 79713 Bad Säckingen (DE)
(72) Erfinder: KIRSTEN, Armin, 79713 Bad Säckingen (DE); VAHLE, Annika, 79713 Bad Säckingen (DE)
(74) Vertreter: dompatent von Kreisler Selting Werner - Partnerschaft von Patent- und Rechtsanwälten mbB
(86) Internationale Anmeldenummer: PCT/EP2020/084370
(87) Internationale Veröffentlichungsnummer: WO 2021/122013

(56) Entgegenhaltungen:
- WO-A1-2004/037112

## Beschreibung

Die Erfindung betrifft ein Verfahren zur Definition mindestens einer Grenzfläche im Inneren eines künstlichen Zahnelements.

Bei der Herstellung künstlicher Zahnelemente besteht ein wesentliches Ziel darin, dass das künstliche Zahnelement den natürlichen Zähnen des Patienten im Erscheinungsbild möglichst ähnlich ist. Beim natürlichen Zahn ist das Dentin im sichtbaren Bereich vom Zahnschmelz umgeben.

Zur Herstellung von Zahnelementen, bei denen es sich um einen vollständigen künstlichen Zahn, eine Krone o.dgl. handeln kann, ist es bekannt, das Zahnelement ebenfalls aus mindestens zwei unterschiedlichen Materialien herzustellen und die Grenze zwischen Dentin und Zahnschmelz nachzubilden. Hierzu ist es aus DE 10 2010 002 484 A1 bekannt, mittels eines Röntgenverfahrens am natürlichen Zahn des Patienten die Grenze zwischen Dentin und Schmelz zu bestimmen und sodann ein Zahnelement herzustellen, bei dem ein inneres, das Dentin nachbildende Material, dieselbe geometrische Form wie das natürliche Dentin des Patienten aufweist und insbesondere die Schichtdicke des den Zahnschmelz ersetzenden Materials entsprechend der Dicke des natürlichen Zahnschmelzes auszubilden. Da die Materialien, die den Zahnschmelz und das Dentin beim künstlichen Zahnelement ersetzen, nicht die gleichen optischen Eigenschaften aufweisen wie die natürlichen Materialien, unterscheiden sich derart hergestellte künstliche Zahnelemente im optischen Erscheinungsbild weiterhin von dem Erscheinungsbild der übrigen Zähne des Patienten.

Aus WO 2004/037112 ist die Gestaltung von Konfektionszähnen bekannt. Hierbei handelt es sich um Zähne, die in einer großen Anzahl (Massenware) hergestellt werden. Eine Anpassung derartiger Konfektionszähne an die Zahnsituation bei einem Patienten kann nur in geringem Maße durch Bearbeiten der äußeren Konturen erfolgen. Eine Veränderung des optischen Erscheinungsbildes kann bei unveränderter Außenkontur nicht in dem gewünschten Maße vorgenommen werden.

Aufgabe der Erfindung ist es, ein Verfahren zur Definition einer Grenzfläche im Inneren eines künstlichen Zahnelements zu schaffen, wobei mit Hilfe eines derartigen Verfahrens ein künstliches Zahnelement mit zufriedenstellenden optischen Eigenschaften hergestellt werden kann, wobei die optischen Eigenschaften des künstlichen Zahnelements möglichst den optischen Eigenschaften des natürlichen Zahns des Patienten entsprechen bzw. möglichst nahe kommen.

Die Lösung der Aufgabe erfolgt erfindungsgemäß durch ein Verfahren gemäß Anspruch 1.

Mit Hilfe des erfindungsgemäßen Verfahrens erfolgt die Definition mindestens einer Grenzfläche im Inneren eines digitalen Zahndatenmodells eines künstlichen Zahnelements. Die mindestens eine Grenzfläche stellt eine Grenzfläche zwischen mindestens zwei unterschiedlichen Materialien, aus denen das künstliche Zahnelement hergestellt wird, dar. Diese Grenzfläche entspricht nicht oder zumindest nicht vollständig der Grenzfläche zwischen Dentin und Zahnschmelz des natürlichen Zahns des Patienten bzw. wird nicht unter Berücksichtigung der tatsächlichen Grenze definiert. Durch Definition zumindest einer anderen, d.h. sich von der natürlichen Grenzfläche zumindest teilweise unterscheidenden Grenzfläche, werden die optischen Eigenschaften der verwendeten Materialien derart genutzt, dass das optische Erscheinungsbild eines derart hergestellten künstlichen Zahnelements dem optischen Erscheinungsbild des natürlichen Zahns möglichst nahe kommt und vorzugsweise im Wesentlichen entspricht. Eine derartig exakte und detaillierte Anpassung des optischen Erscheinungsbildes eines künstlichen Zahnelements an das optische Erscheinungsbild des natürlichen Zahnelements erfolgt erfindungsgemäß vorzugsweise stets anhand des digitalen Zahndatenmodells, da es hierdurch möglich ist, die Grenzfläche zwischen Dentin und Zahnschmelz individuell anzupassen.

Zunächst kann ein Bestimmen der dreidimensionalen Außenkontur des Zahnelements erfolgen. Die Außenkontur des künstlichen Zahnelements entspricht hierbei der Außenkontur des zu ersetzenden natürlichen Zahns. Dies kann beispielsweise durch Auswahl einer geeigneten Außenkontur aus einer Zahnbibliothek erfolgen, die auf die individuelle Anatomie angepasst wird, um den funktionellen und ästhetischen Anforderungen der herzustellenden Restauration zu genügen. Alternativ zur Auswahl der Form aus einer Zahnbibliothek kann beispielsweise bei einer Einzelkrone auch die Zahnkontur des gegenüberliegenden Zahns gespiegelt werden. In einem insbesondere dem erfindungsgemäßen Verfahren vorgelagerten Schritt, kann eine dreidimensionale Außenkontur eines Zahnelements bestimmt und insbesondere erfasst werden. Auch ist es möglich, einen Datensatz zu öffnen, der die dreidimensionale Außenkontur des Zahnelements umfasst.

Ferner kann nur Vorbereitung des erfindungsgemäßen Verfahrens ein Ausrichten einer dreidimensionalen Außenkontur des Zahnelements an einem Koordinatensystem erfolgen. Das Koordinatensystem steht vorzugsweise in Bezug zu anatomisch definierten Richtungsbezeichnungen, so dass das Koordinatensystem insbesondere die Richtungen mesial, distal, apikal und inzisal/okklusal aufweist. Eine Ausrichtung eines Zahnelements an einem Koordinatensystem weist den Vorteil auf, dass es auf einfache Weise möglich ist, ausgehend von der dreidimensionalen Außenkontur des Zahnelements, mindestens eine im Inneren des Zahnelements liegende Grenzfläche zu definieren.

Erfindungsgemäß erfolgt das Definieren einer ersten Grenzkurve auf der Zahnoberfläche des künstlichen Zahnelements. Eine erste Grenzkurve kann auf Basis des Zahnäquators definiert werden. Der Zahnäquator ist der größte Umfang eines Zahns im Bereich der Zahnkrone. Ebenso kann die erste Grenzkurve auch auf einer Präparationsgrenze als Kurve basieren, wobei die Präparationsgrenze die Grenze zwischen dem künstlich bearbeiteten Zahnelement und der unbearbeiteten Zahnoberfläche darstellt. Auch ist es möglich, die erste Grenzkurve zumindest teilweise manuell zu definieren. Auch ist ein manuelles Anpassen einer beispielsweise auf Basis des Zahnäquators und/oder der Präparationsgrenze insbesondere automatisch definierten Kurve möglich. Bevorzugt ist es, dass die erste Grenzkurve zwischen dem Zahnäquator und der Präparationsgrenze definiert wird. Hierbei ist es beispielsweise möglich, die erste Grenzkurve in einem festen Abstand zum Zahnäquator und/oder zur Präparationsgrenze zu definieren. Insbesondere kann die erste Grenzkurve den gleichen Abstand zum Zahnäquator und zur Präparationsgrenze aufweisen, d.h. exakt zwischen dem Zahnäquator und der Präparationsgrenze vorgesehen sein.

Bezogen auf die erste Grenzkurve erfolgt ein Bestimmen einer inzisal bzw. okklusal gelegenen Zahnoberfläche. Diese Zahnoberfläche wird erfindungsgemäß nach innen verschoben. Die Verschiebung erfolgt in Richtung der Flächennormalen, wobei die Verschiebung insbesondere um unterschiedliche Beträge erfolgt. Es existieren somit Flächenbereiche der Zahnoberfläche, die stärker oder weniger stark nach innen verschoben werden. Diese unterschiedlichen Beträge der Verschiebung basieren auf variablen Designparametern. Durch ein derartiges Verschieben der Zahnoberfläche wird die mindestens eine Grenzfläche erzeugt.

Auf Grund der insbesondere dreidimensionalen komplexen Form der Zahnoberfläche und somit auch der durch Verschieben erzeugten insbesondere ersten Grenzfläche erfolgt ein Verschieben in Richtung der unterschiedlichen Flächennormalen. Die Flächennormalen weisen in unterschiedliche Richtungen, da es sich bei der Zahnoberfläche um eine dreidimensionale Oberfläche handelt.

Besonders bevorzugt ist es, die Zahnoberfläche in mehrere, insbesondere eine Vielzahl von Teilflächen, zu unterteilen. Besonders bevorzugt ist das Vorsehen von mindestens 30 Teilflächen. Vorzugsweise erfolgt sodann ein Verschieben der einzelnen Teilflächen in Richtung einer zugehörigen Flächennormalen um unterschiedliche Beträge zur Erzeugung der mindestens einen, insbesondere der ersten Grenzfläche. Hierbei erfolgt insbesondere automatisch ein Verschieben der verkleinerten Teilflächen zur Ausbildung einer insbesondere geschlossenen, d.h. eine lückenlose Oberfläche ausbildenden Grenzfläche. Die einzelnen Teilflächen können hierbei eine insbesondere dreieckige Außenkontur aufweisen.

Die Designparameter können insbesondere bei unterschiedlichen Zähnen des Patienten variieren. Unterschiedliche Designparameter können beispielsweise auch erforderlich sein, wenn die Restauration auf unterschiedlich gefärbten Zahnstümpfen erfolgt oder die Restaurationen unterschiedlich dick gestaltet sind, da das optische Erscheinungsbild der Zahnstümpfe auf Grund der Transluzenz der verwendeten Materialien des künstlichen Zahnelements Einfluss auf das Erscheinungsbild des künstlichen Zahnelements hat. Die Designparameter sind insbesondere auch abhängig vom verwendeten Material. Beispielsweise kann eine Mindestwandstärke eines Materials vorgegeben sein. Dies ist insbesondere bei dem die Stabilität im Wesentlichen bestimmenden inneren, insbesondere dentinfarbenen Material der Fall. Außerdem unterscheiden sich die optischen Eigenschaften von polymerbasiertem Material von denen rein keramischer Materialien.

Bei dem erfindungsgemäßen Verfahren beschreiben die variablen Designparameter eine maximale erste Verschiebung der Zahnoberfläche und/oder eine erste Länge zur Definition einer Übergangsfläche.

Vorzugsweise ist hierbei die erste Verschiebung derart gewählt, dass bei Front- und Seitenzähnen unmittelbar an der ersten Grenzkurve noch keine Verschiebung erfolgt. Bei Seitenzähnen erfolgt zusätzlich bei der Mittelfissur keine Verschiebung. Der Betrag der ersten Verschiebung nimmt sodann in Richtung der Flächennormalen nach inzisal bzw. okklusal ausgehend von der ersten Grenzkurve vorzugsweise stetig zu, bis der Betrag der Verschiebung die maximale erste Verschiebung erreicht.

Die Definition der Übergangsfläche kann beispielsweise durch Festlegen des Designparameters der ersten Länge erfolgen. Vorzugsweise definiert somit die erste Länge ausgehend von der ersten Grenzkurve einen Übergangsbereich, wobei sich die Übergangsfläche vorzugsweise in inzisale/okklusale Richtung erstreckt. Diese ist ausgehend von Null bis zu der vollen ersten Verschiebung definiert. Ein Übergangsbereich ist vorgesehen, um einen insbesondere fließenden Übergang ausgehend von der ersten Grenzkurve zur vollständigen ersten Verschiebung zu realisieren. Durch das Definieren einer derartigen Übergangsfläche ist es möglich, das natürliche Erscheinungsbild eines Zahnes nachzubilden, bei dem der Zahnschmelz in apikaler Richtung immer dünner wird.

Die Definition einer Übergangsfläche kann auch derart erfolgen, dass die erste Grenzkurve um die erste Länge nach inzisal bzw. okklusal projiziert wird, wobei durch diese Projektion eine zweite Grenzkurve definiert wird. Die Übergangsfläche ist sodann zwischen der ersten und der zweiten Grenzkurve definiert.

Der Designparameter der ersten Länge zur Definition der Übergangsfläche ist vorzugsweise kleiner als die maximale Höhe des Zahnelements, ausgehend von der ersten Grenzkurve. Vorzugsweise ist die erste Länger kleiner als 80 %, besonders bevorzugt kleiner als 50 %, dieser maximalen Höhe.

Bei einer bevorzugten Weiterbildung des erfindungsgemäßen Verfahrens beschreiben die variablen Designparameter eine weitere Verschiebung der ersten Grenzfläche. Durch die erfindungsgemäß bevorzugte Weiterbildung des Verfahrens derart, dass die erste Grenzfläche verschoben wird, kann ein Zahnelement erzeugt werden, dessen Erscheinungsbild noch näher an dem natürlichen Erscheinungsbild des Zahnes ist. Insbesondere können durch diese weitere Verschiebung scharfe Kanten, die ansonsten ggf. sichtbar wären, vermieden werden. Durch diese weitere Verschiebung werden Unregelmäßigkeiten in dem natürlichen Schichtaufbau eines Zahnes (sog. Mamelons) imitiert.

Zunächst wird eine dritte bzw. weitere Grenzkurve definiert bzw. erstellt. Dies erfolgt durch eine Projektion der ersten oder zweiten Grenzkurve um eine zweite Länge, wobei das Vorsehen einer zweiten Grenzkurve optional ist. Insbesondere wird die dritte bzw. weitere Grenzkurve durch inzisale bzw. okklusale Projektion der ersten Grenzkurve oder durch apikale Projektion der zweiten Grenzkurve erstellt. Alternativ kann die dritte Grenzkurve unabhängig von der ersten oder zweiten Grenzkurve manuell oder basierend auf anderen Merkmalen des Zahnelements, zum Beispiel dem Äquator oder der Präparationsgrenze, erstellt werden.

Ferner wird vorzugsweise eine inzisale bzw. okklusale erste Flächenkontur bestimmt. Die erste Flächenkontur wird durch die höchste Kurve auf der durch die erste maximale Verschiebung erstellten ersten Grenzfläche definiert. Die höchste Kurve kann automatisch ermittelt und ggf. manuell korrigiert werden. Auf der ersten Flächenkontur werden Knotenpunkte erstellt bzw. festgelegt. Anschließend erfolgt, zumindest teilweise, ein Verschieben der Knotenpunkte in apikale oder inzisale/okklusale Richtung. Die zumindest teilweise verschobenen Knotenpunkte werden mit einer zweiten Flächenkontur miteinander verbunden. Die derart erzeugte zweite Flächenkontur definiert die maximale zweite Verschiebung der Zahnoberfläche (bzw. der ersten Grenzfläche) im Bereich der inzisalen bzw. okklusalen Flächenkontur.

Der Betrag der zweiten Verschiebung nimmt in dieser bevorzugten Ausführungsform des erfindungsgemäßen Verfahrens in Richtung der Flächennormalen bei Front- und Seitenzähnen in apikaler Richtung um eine dritte Länge stetig ab bis maximal die dritte Grenzkurve bzw. eine zu diesem Zweck als maximal definierte Länge erreicht ist. Bei Seitenzähnen nimmt der Betrag der zweiten Verschiebung ebenfalls in Richtung der Mittelfissur stetig ab bis die Mittelfissur erreicht ist. Vorzugsweise ist der Betrag der zweiten Verschiebung unmittelbar an der dritten Grenzkurve bzw. unmittelbar an der Mittelfissur "0". Die Mittelfissur kann auch manuell definiert werden und/oder es kann eine manuelle Korrektur einer automatisch definierten bzw. vorgegebenen Mittelfissur erfolgen.

Vorzugsweise liegt die maximale erste Verschiebung der Zahnoberfläche im Bereich von 0 mm bis 4 mm.

Des Weiteren ist es bevorzugt, dass die erste Länge, die zur Erzeugung der Übergangsfläche erforderlich ist, eine Erstreckung von 0,1 mm bis 10 mm aufweist.

Eine Grenze, d.h. der Anfang und das Ende der automatisch ermittelten höchsten Kurve auf der ersten und/oder zweiten inzisalen Flächenkontur, wird bei einer bevorzugten Weiterbildung der Erfindung bei Frontzähnen durch einen Winkel definiert. Bei dem Winkel handelt es sich um einen Winkel zwischen der Tangenten auf der inzisalen Flächenkontur und der Zahnachse, wobei der Winkel 0° bis 90°, vorzugsweise 10° bis 70° und besonders bevorzugt 40° bis 50° beträgt. Die Zahnachse ist bei Zähnen als Verbindungslinie zwischen der Wurzelspitze bei einwurzligen Zähnen und der Mitte der Schneidekante bzw. Kaufläche und bei mehrwurzligen Zähnen zwischen der Wurzelgabelung und der der Kauflächenmitte definiert. Insbesondere ist es auch möglich, die Grenzen, d.h. den Anfang und das Ende, sowie auch ggf. den Verlauf der inzisalen Flächenkontur manuell zu definieren oder anzupassen.

Vorzugsweise wird die Position der Knotenpunkte auf der inzisalen Flächenkontur von Frontzähnen relativ zur Gesamtlänge der inzisalen Flächenkontur angegeben bzw. definiert. Bevorzugt ist es hierbei, dass mindestens fünf Punkte auf der inzisalen Flächenkontur definiert werden. Bevorzugt ist es, eine höhere Anzahl von Punkten, insbesondere mehr als 10 und besonders bevorzugt mehr als 20 Punkte zu definieren.

Bei Seitenzähnen ist es bevorzugt, dass die Position der Knotenpunkte auf der inzisalen/okklusalen Flächenkontur pro Höcker relativ zu den Längen der Höckergrate angegeben werden. Insbesondere wird hierbei die Länge der Höckergrade zwischen dem mesialen Höckeranfang und der Höckerspitze bzw. der Höckerspitze und dem distalen Höckerende verwendet. Bevorzugt ist es wiederum, dass auf der Gesamtlänge der okklusalen Flächenkontur pro Höcker mindestens fünf Punkte definiert werden. Bevorzugt ist eine höhere Zahl an Punkten von mindestens 10, insbesondere mindestens 20 Punkten.

Die Verschiebung der Knotenpunkte auf der inzisalen/okklusalen Flächenkontur in apikale Richtung liegt vorzugsweise im Bereich von -4,0 mm bis +4,0 mm.

Die Ausrichtung des Zahnelements kann manuell erfolgen.

Bevorzugt ist es, dass die Ausrichtung des Zahnelements in Bezug zu anatomisch definierten Richtungsbezeichnungen durch geometrische Analyse der Zahnelemente und deren Vergleich mit Referenzgeometrien automatisch erfolgt. Zum Beispiel kann die apikale Richtung gegenüber der inzisalen/okklusalen Richtung bei Zahnkronen dadurch ermittelt werden, dass eine Präparationsgrenze anhand eines definierten Grenzwinkels der Oberflächengeometrie des Zahnelements automatisch erkannt wird. Die Präparationsgrenze weist in Bezug zum restlichen Zahnelement in die apikale Richtung, die auch der Zahnachse entspricht. Um die korrekte Rotation des Zahnelements um diese Zahnachse automatisch zu ermitteln, können die Höckerspitzen des Zahnelements als höchste okklusale/inzisale Punkte erkannt werden, deren Ausrichtung anhand von Krümmungs- und Winkelmerkmalen im Zusammenhang mit der Mittelfissur, die die am meisten apikal liegende Linie der Okklusalfläche darstellt, erfolgen kann. Bei Frontzähnen kann die Inzisalkante als am weitesten inzisal liegende Silhouettenkurve herangezogen werden, um anhand des Krümmungs- und Winkelmerkmals die korrekte Ausrichtung nach mesial und distal zu ermitteln.

Des Weiteren ist es bevorzugt, dass die Ausrichtung des Zahnelements auf Metadaten basiert, die bei der Erstellung der Außenkontur erzeugt werden. Je nach CAD-Programm, das zur Erstellung der Außenkontur herangezogen wurde, könnten zum Beispiel die Geometriedaten des Zahnelements bezogen auf ein xyz-Koordinatensystem ausgerichtet sein, das z.B. inzisal immer in z-Richtung, labial immer in y-Richtung o.ä. definiert. Die Informationen werden teilweise als XML-Datei ausgegeben. Basierend auf diesen Informationen kann dann eine Ausrichtung für das hier beschriebene Verfahren automatisch erfolgen.

Wie vorstehend beschrieben, kann die erste Grenzkurve auf der Erfassung der Zahnäquators basieren. Bevorzugt ist es hierbei, dass auf dieser Kurve mindestens vier Knotenpunkte entsprechend der anatomisch definierten Richtungsbezeichnung beschrieben sind, die in apikaler oder inzisaler/okklusaler Richtung um relativ zur Zahngröße definierte Abstände auf der Zahnoberfläche verschoben werden. Die erste Grenzkurve kann zum Beispiel näherungsweise sehr gut dadurch erzeugt werden, dass der Zahnäquator an den mindestens vier Knotenpunkten in Richtung apikal um die Hälfte des Abstands zwischen Zahnäquator und Präparationsgrenze verschoben werden.

Wie beschrieben, kann die erste Grenzkurve auch auf der Erfassung der Präparationsgrenze basieren. Auch auf dieser Kurve ist es bevorzugt, dass mindestens vier Knotenpunkte entsprechend der anatomisch definierten Richtungsbezeichnung beschrieben sind, die in apikaler oder inzisaler/okklusaler Richtung um relativ zur Zahngröße definierte Abstände auf der Zahnoberfläche verschoben werden.

Die Mittelfissur kann bei Seitenzähnen automatisch anhand einer Detektion bzw. Bestimmung der tiefsten Kurve auf der Okklusalfläche, die von mesial nach distal führt, ermittelt werden. Gegebenenfalls kann eine derart ermittelte Mittelfissur manuell angepasst werden. Die Mittelfissur kann auch manuell markiert werden. Eine Markierung bzw. Bestimmung kann beispielsweise mit bildgebenden Verfahren erfolgen, da es sich bei der Mittelfissur um die tiefste Kurve in inzisaler/applikaler Richtung handelt.

Die mindestens eine im Inneren des künstlichen Zahnelements definierte Grenzfläche dient somit erfindungsgemäß vorzugsweise zur Definition der räumlichen Ausdehnung unterschiedlicher Materialien in dem Zahnelement. Die unterschiedlichen Materialien weisen hierbei insbesondere unterschiedliche optische Eigenschaften auf. Die Materialien mit unterschiedlichen optischen Eigenschaften verleihen auf Grund der definierten räumlichen Ausdehnung ein natürliches Erscheinungsbild des künstlichen Zahnelements, in dem die Materialien, vorzugsweise zumindest die optischen Eigenschaften von Dentin bzw. Zahnschmelz nachahmen. Auch können unterschiedliche Materialien unterschiedliche mechanische Eigenschaften aufweisen.

Das Öffnen eines Datensatzes des digitalen Zahndatenmodells ist optional und nur dann erforderlich, wenn entsprechende Daten zuvor abgespeichert wurden. Sofern eine Restauration unmittelbar nach dem Erfassen der Daten erfolgt, ist es nicht erforderlich, einen gespeicherten Datensatz zu öffnen.

Das erfindungsgemäße künstliche Zahnelement imitiert vorzugsweise einen einzelnen Zahn, der als Teil oder in Form einer dentalen Restauration hergestellt wird. Die dentale Restauration umfasst hierbei vorzugsweise eine zahn- oder implantatgetragene Krone, Brücke oder herausnehmbare Voll- oder Teilprothese.

Mit Hilfe des erfindungsgemäßen Verfahrens ist es insbesondere möglich, durch die Grenzflächen im Inneren des künstlichen Zahnelements auch die räumliche Ausdehnung von unterschiedlichen Materialien, die in dem Zahnelement verwendet werden, zu definieren. Hierbei ist es insbesondere möglich, dass die unterschiedlichen Materialien unterschiedliche optische Eigenschaften aufweisen. Durch die insbesondere erfindungsgemäß erfolgte Festlegung der räumlichen Ausdehnung der einzelnen Materialien im künstlichen Zahnelement kann ein dem natürliches Erscheinungsbild des Zahnes sehr nahe kommendes Erscheinungsbild erzielt werden.

Die verwendeten unterschiedlichen Materialien können auch unterschiedliche mechanische Eigenschaften aufweisen.

Insbesondere handelt es sich bei dem erfindungsgemäßen Zahnelement um eine dentale Restauration. Es kann sich um eine zahn- oder implantatgetragene Krone, Brücke oder auch eine herausnehmbare Voll- oder Teilprothese handeln.

Nachfolgend wird die Erfindung anhand einer bevorzugten Ausführungsform unter Bezugnahme auf die anliegenden Zeichnungen näher erläutert.

Es zeigen:
- Fig. 1: eine schematische Vorderansicht eines künstlichen Zahnelements eines Frontzahns,
- Fig. 2: eine schematische Seitenansicht eines künstlichen Zahnelements eines Frontzahns,
- Fign. 3 und 4: eine schematische Vorderansicht bzw. Seitenansicht eines künstlichen Zahnelements eines Frontzahns entsprechend Fign. 1 und 2, wobei zusätzliche Flächen und Kurven dargestellt sind,
- Fign. 5 und 6: eine schematische Vorderansicht bzw. Seitenansicht eines künstlichen Zahnelements eines Frontzahns entsprechend Fign. 1 und 2, wobei zusätzliche Flächen und Kurven dargestellt sind,
- Fig. 7: eine inzisale Ansicht des in Fig. 5 dargestellten Zahnelements,
- Fign. 8a bis 8c: alternative Darstellungen der Fig. 5 mit unterschiedlichen Tangentenwinkeln,
- Fig. 9: eine schematische Darstellung einer ersten und einer zweiten Flächenkontur,
- Fig. 10: eine schematische Vorderansicht eines Zahnelements eines Frontzahns entsprechend Fign. 1 und 2, wobei zusätzliche Flächen und Kurven dargestellt sind,
- Fig. 11: eine schematische Seitenansicht entlang der Schnittebene XI in Fig. 10,
- Fig. 12: eine schematische Seitenansicht eines künstlichen Zahnelements eines Seitenzahns und
- Fig. 13: eine schematische Ansicht von inzisal des in Fig. 12 dargestellten künstlichen Zahnelements eines Seitenzahns.

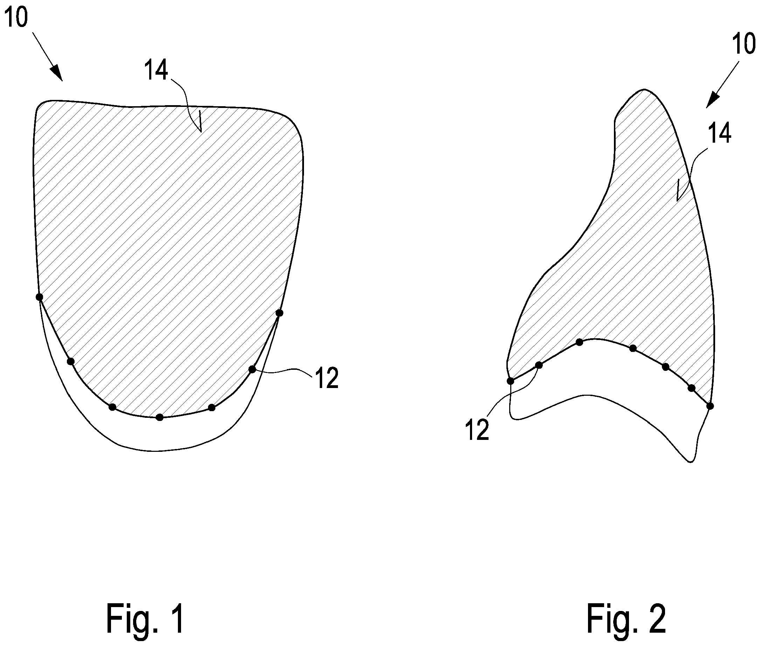

In den Fign. 1 und 2 ist ein künstliches Zahnelement 10 eines Frontzahns in Vorder- und in Seitenansicht dargestellt. Hierbei handelt es sich um die dreidimensionale Außenkontur des Zahnelements, wobei vorzugsweise ein entsprechender Datensatz geöffnet wurde, der die Daten der dreidimensionalen Außenkontur des Zahnelements umfasst. Nach dem Ausrichten des Zahnelements 10 an einem (nicht dargestellten) Koordinatensystem erfolgt eine Definition einer ersten Grenzkurve 12, wobei die erste Grenzkurve 12 manuell und/oder auf Basis einer Präparationsgrenze oder auf Basis eines Zahnäquators erfolgen kann. In inzisaler Richtung, d.h. in Fign. 1 und 2 oberhalb der ersten Grenzkurve 12, ist durch die erste Grenzkurve 12 eine Zahnoberfläche 14 definiert.

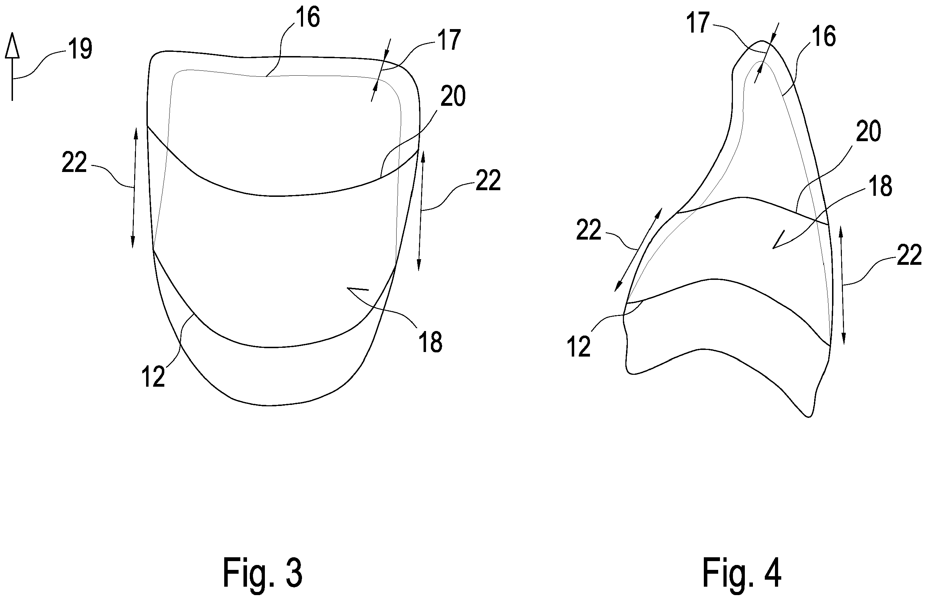

Die Zahnoberfläche 14 wird nach innen in Richtung der Flächennormalen zur Erzeugung einer ersten Grenzfläche 16 (Fign. 3 und 4) verschoben. Hierbei ist als Beispiel eine maximale Verschiebung 17 dargestellt.

Wie in Fign. 3 und 4 dargestellt, kann anhand einer bevorzugten Ausführungsform der Erfindung ausgehend von der ersten Grenzkurve 12 eine sich in inzisaler Richtung 19 erstreckende Übergangsfläche 18 definiert werden. Im dargestellten Ausführungsbeispiel erfolgt das Definieren der Übergangsfläche 18 derart, dass eine zweite Grenzkurve 20 definiert wird. Die zweite Grenzkurve 20 kann durch eine Projektion der ersten Grenzkurve 12 um eine erste Länge 22 erfolgen.

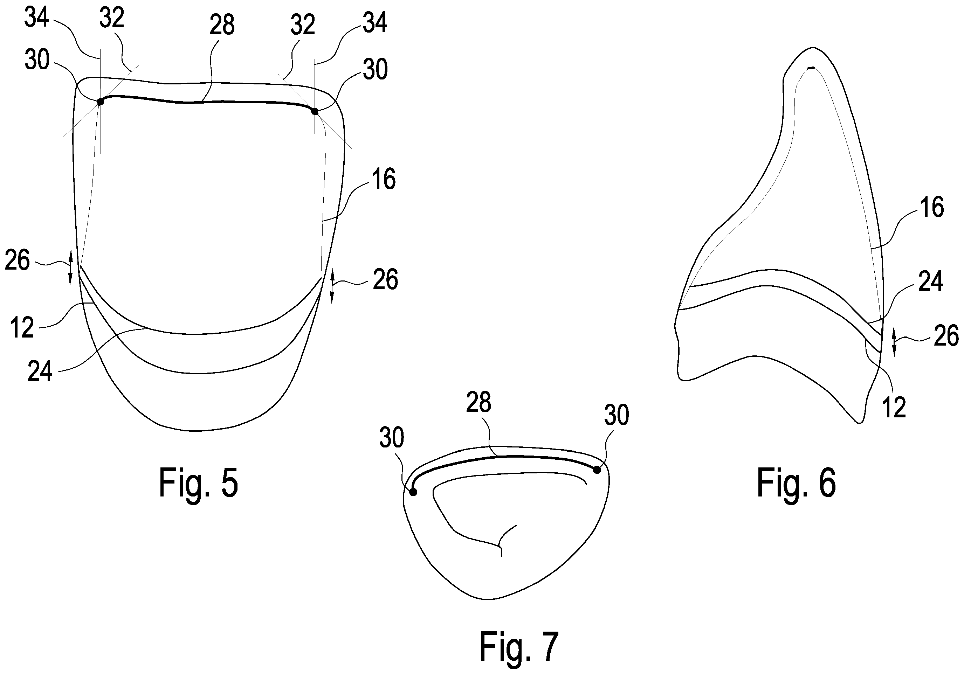

Im dargestellten Ausführungsbeispiel erfolgt ferner die Definition einer dritten Grenzkurve 24 (Fign. 5 und 6). Die dritte Grenzkurve 24 kann durch Projektion der ersten Grenzkurve 12 um eine zweite Länge 26 erfolgen.

Die höchste Kurve auf der durch die erste maximale Verschiebung erstellten ersten Grenzfläche (16) ist als inzisale/okklusale erste Flächenkontur 28 definiert. Die erste Flächenkontur 28 weist zwei Grenzen 30 bzw. insbesondere einen Anfang und ein Ende auf. Die Grenzen 30 werden hierbei durch Tangenten 32 definiert. In Fig. 5 weisen die Tangenten 32 einen Winkel von ca. 45° zur Zahnachse 34 auf.

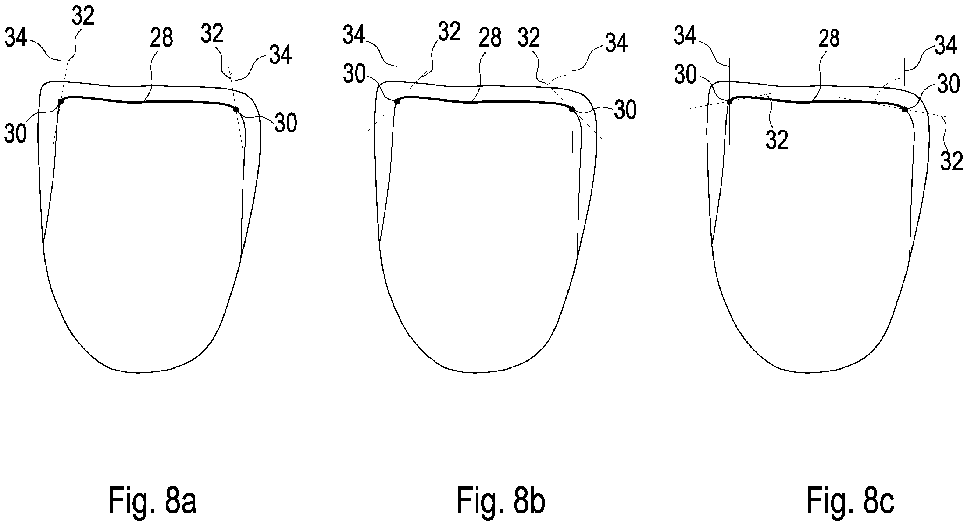

Wie in den Fign. 8a bis 8c dargestellt, ändert sich die Lage der Grenzen 30 bei einer Veränderung des Tangentenwinkels.

In Draufsicht bzw. in Ansicht von inzisal (Fig. 7) ist der Verlauf der ersten Flächenkontur 28 dargestellt.

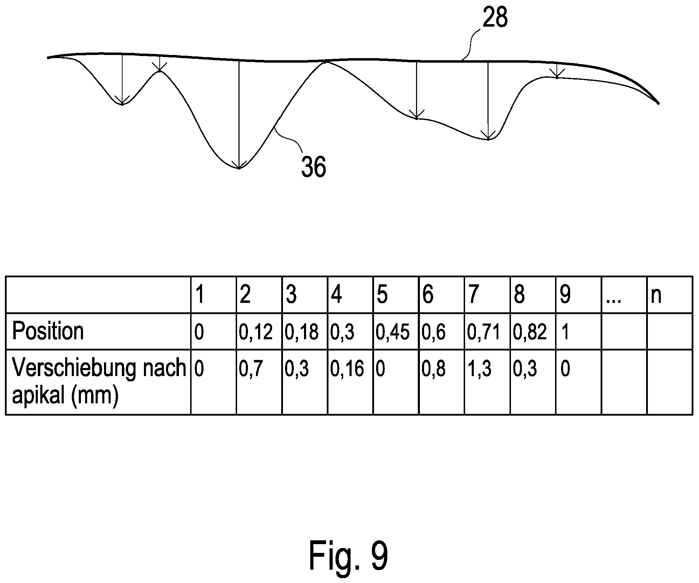

Auf der Flächenkontur wird eine Anzahl Knotenpunkte (Fig. 9) definiert. Diese Knotenpunkte sind als Beispiel in Fig. 9 mit Knotenpunkt 1 bis Knotenpunkt 9 bezeichnet und tabellarisch aufgeführt. Wie durch Pfeile dargestellt, erfolgt ein Verschieben der Knotenpunkte, die sich auf der ersten Flächenkontur 28 befinden, in apikaler Richtung. Das Verbinden der verschobenen Knoten ergibt die zweite Flächenkontur 36.

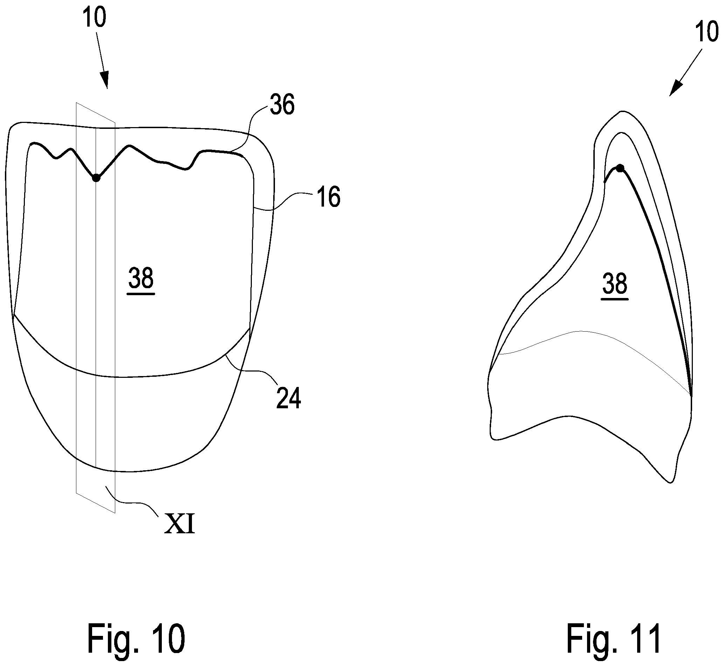

Aus den vorstehenden Verfahrensschritten ergibt sich sodann im dargestellten Ausführungsbeispiel eine dreidimensionale Grenzfläche, die durch die dritte Grenzkurve 24 Teile der ersten Grenzfläche 16 sowie die zweite Flächenkontur 36 definiert ist (Fign. 10 und 11). Innerhalb dieser dreidimensionalen Fläche, d.h. in dem Raum 38, ist in bevorzugter erfindungsgemäßer Ausführungsform ein anderes Material vorgesehen als in den diesen Raum umgebenden Volumen des künstlichen Zahnelements 10. Diese beiden Volumina werden insbesondere durch unterschiedliche Materialien definiert, wobei das innere Volumen 38 den Zahnschmelz nachbildet. Hierbei ist die Grenzfläche zwischen dem den Zahnschmelz ausbildenden Volumen und dem umgebenden Volumen nicht mit der entsprechenden Grenzfläche des zugehörigen natürlichen Zahns identisch.

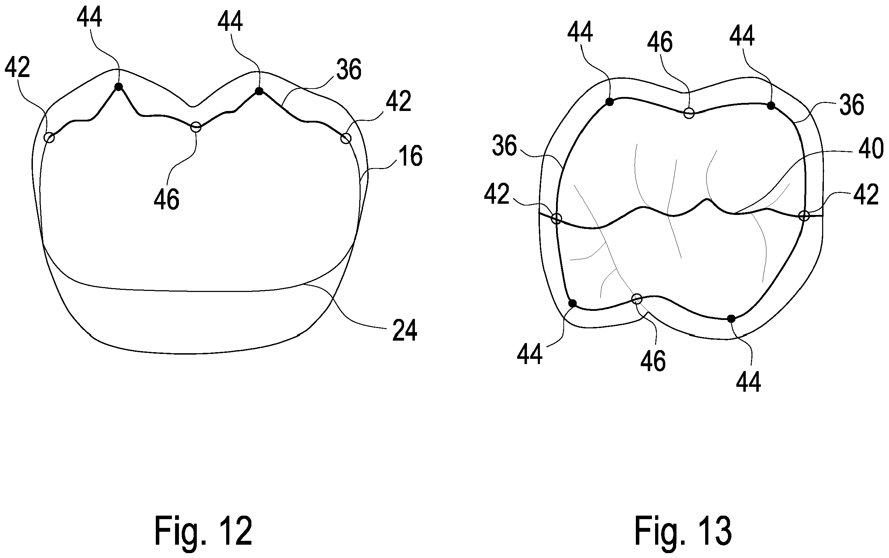

In den Fign. 12 und 13 sind die entsprechenden Konturen bei einem Seitenzahn dargestellt, wobei diese den dem vorstehenden Rand eines Frontzahns beschriebenen Konturen entsprechen. Zusätzlich ist die Mittelfissur 40 (Fig. 13) dargestellt. Die die Mittelfissur 40 darstellende Linie weist zwei Grenzpunkte 42 auf, die jeweils den Höckeranfang bzw. das Höckerende darstellen. Des Weiteren sind auf der zweiten Flächenkontur 36 Höckerspitzen 44 eingezeichnet. Ein Punkt 46 bezeichnet ein Höckerende und Höckeranfang des nächsten Höckers.

## Patentansprüche

1. Computerimplementiertes Verfahren zur Definition mindestens einer Grenzfläche (16) im Inneren eines digitalen Zahndatenmodells eines künstlichen Zahnelements mit mindestens den Schritten:
Definition einer ersten Grenzkurve (12) auf der Zahnoberfläche des künstlichen Zahnelements,
Bestimmen einer bezogen auf die ersten Grenzkurve inzisal/okklusal gelegenen Zahnoberfläche (14) und
Verschieben von Flächenbereichen dieser Zahnoberfläche (14) nach innen in Richtung der Flächennormalen um unterschiedliche Beträge zur Erzeugung der mindestens einen Grenzfläche (16), insbesondere der ersten Grenzfläche (16),
wobei die unterschiedlichen Beträge der Verschiebung auf variablen Designparametern beruhen, die eine maximale erste Verschiebung der Zahnoberfläche (14) und eine erste Länge (22) zur Definition einer sich in inzisaler Richtung erstreckenden Übergangsfläche (18) beschreiben, wobei die erste Länge (22) ausgehend von der ersten Grenzkurve (12) einen Übergangsbereich definiert,
**dadurch gekennzeichnet, dass**
bei Front- und Seitenzähnen unmittelbar an der ersten Grenzkurve (12), und vorzugsweise bei Seitenzähnen zusätzlich bei der Mittelfissur (40, bei einer ersten Verschiebung noch keine Verschiebung erfolgt und wobei der Betrag der ersten Verschiebung in Richtung der Flächennormalen nach inzisal/ okklusal ausgehend von der ersten Grenzkurve (12) stetig zunimmt bis die maximale erste Verschiebung (17) erreicht ist, wobei die erste Länge (22) als Designparameter festgelegt wird, und die erste Länge ausgehend von Null bis zu der vollen ersten Verschiebung definiert ist.

2. Verfahren nach Anspruch 1, bei welchem die Zahnoberfläche (14) in mehrere insbesondere eine Vielzahl von Teilflächen unterteilt wird.

3. Verfahren nach Anspruch 2, bei welchem das Verschieben der Teilflächen in Richtung der zugehörigen Flächennormalen um unterschiedliche Beträge zur Erzeugung der mindestens einen Grenzfläche (16), insbesondere der ersten Grenzfläche (16), erfolgt.

4. Verfahren nach Anspruch 3, bei welchem die Teilflächen zur Ausbildung einer insbesondere verkleinerten geschlossenen Grenzfläche (16) verschoben werden.

5. Verfahren nach einem der Ansprüche 1-4, bei welchem sich die Übergangsfläche (18) in inzisale/okklusale Richtung erstreckt.

6. Verfahren nach einem der Ansprüche 1-5, bei welchem die Übergangsfläche (18) an die erste Grenzkurve (12) angrenzend ausgebildet ist.

7. Verfahren nach einem der Ansprüche 1-6, wobei die die erste Grenzkurve (12) um die erste Länge (22) nach inzisal/okklusal zur Definition einer zweiten Grenzkurve (20) projiziert wird und
wobei die Übergangsfläche (18) zwischen der ersten und der zweiten Grenzkurve (18,20) definiert ist.

8. Verfahren nach einem der Ansprüche 1-7, bei dem die variablen Designparameter eine Verschiebung der ersten Grenzfläche beschreiben, bei der
eine dritte Grenzkurve (24) durch Projektion der ersten oder zweiten Grenzkurve (12,20) um eine zweite Länge (26) definiert wird und
eine inzisale/okklusale erste Flächenkontur (28) als höchste Kurve auf der durch die erste maximale Verschiebung erstellten ersten Grenzfläche (16) bestimmt wird,
auf der Knotenpunkte erstellt werden, deren Position auf der ersten Flächenkontur (28) festgelegt ist und
wobei durch zumindest teilweises Verschieben der Knotenpunkte in apikale und/oder inzisale/okklusale Richtung und Verbinden der zumindest teilweise verschobenen Knotenpunkte eine zweite Flächenkontur (36) erzeugt wird,
die die maximale zweite Verschiebung der ersten Grenzfläche (16) im Bereich der inzisalen/ okklusalen Flächenkontur (28) definiert und
wobei der Betrag der zweiten Verschiebung in Richtung der Flächennormalen bei Front- und Seitenzähnen in apikaler Richtung und bei Seitenzähnen ebenfalls in Richtung der Mittelfissur um eine dritte Länge stetig abnimmt, bis maximal die dritte Grenzkurve (24) bzw. die Mittelfissur (40) erreicht ist.

9. Verfahren nach mindestens einem der Ansprüche 1-8, bei welchem die maximale erste Verschiebung der bestimmten Zahnoberfläche um 0 bis 4,0 mm erfolgt und/oder bei welchem die erste Länge eine Erstreckung von 0,1 bis 10,0 mm aufweist.

10. Verfahren nach mindestens einem der Ansprüche 8 oder 9, wobei bei Frontzähnen eine Grenze (30) der höchsten Kurve auf der ersten und/oder zweiten inzisalen/okklusalen Flächenkontur (28,36) durch einen Winkel der Tangenten (32) auf der inzisalen Flächenkontur (28,36) im Verhältnis zur Zahnachse (34) bestimmt wird, wobei der Winkel 0° bis 90°, vorzugsweise 10° bis 70°, und besonders bevorzugt 40° - 50° beträgt.

11. Verfahren nach mindestens einem der Ansprüche 8-10, bei dem Anfang, Ende und Verlauf der inzisalen Flächenkontur (28,36) manuell definiert oder angepasst wird.

12. Verfahren nach mindestens einem der Ansprüche 8-11, bei dem die Positionen der Knotenpunkte auf der inzisalen Flächenkontur (28,36) von Frontzähnen relativ zur Gesamtlänge der inzisalen Flächenkontur (28,36) angegeben werden.

13. Verfahren nach mindestens einem der Ansprüche 8-12, bei dem die Positionen der Knotenpunkte auf der inzisalen/okklusalen Flächenkontur (36) von Seitenzähnen pro Höcker relativ zu den Längen der Höckergrate zwischen mesialem Höckeranfang und Höckerspitze, bzw. der Höckerspitze und dem distalen Höckerende angegeben werden.

14. Verfahren nach mindestens einem der Ansprüche 8-13, bei welchem die Verschiebung der Knotenpunkte auf der inzisalen/okklusalen Flächenkontur (28) nach apikal im Bereich von -4,0 bis 4,0 mm erfolgt.

15. Verfahren nach mindestens einem der vorhergehenden Ansprüche, bei dem die Ausrichtung des Zahnelements in Bezug zu anatomisch definierten Richtungsbezeichnungen durch geometrische Analyse der Zahnelemente und deren Vergleich mit Referenzgeometrien erfolgt.

16. Verfahren nach mindestens einem der vorhergehenden Ansprüche, bei dem die Ausrichtung des Zahnelements auf Metadaten basiert, die bei der Erstellung der Außenkontur erzeugt wurden und/oder bei dem die Ausrichtung des Zahnelements manuell erfolgt.

17. Verfahren nach mindestens einem der vorhergehenden Ansprüche, bei dem die erste Grenzkurve (12) auf der Erfassung des Zahnäquators als Kurve basiert, auf der mindestens vier Knotenpunkte entsprechend der anatomisch definierten Richtungsbezeichnungen beschrieben sind, die in apikaler oder inzisaler/okklusaler Richtung um relativ zur Zahngröße definierte Abstände auf der Zahnoberfläche verschoben werden und/oder bei dem die erste Grenzkurve (12) auf der Erfassung der Präparationsgrenze als Kurve basiert, auf der mindestens vier Knotenpunkte entsprechend der anatomisch definierten Richtungsbezeichnungen beschrieben sind, die in apikaler oder inzisaler/okklusaler Richtung um relativ zur Zahngröße oder bezogen auf den Abstand zur Präparationsgrenze definierte Abstände auf der Zahnoberfläche verschoben werden.

18. Verfahren nach mindestens einem der vorhergehenden Ansprüche, bei dem die Mittelfissur (40) bei Seitenzähnen automatisch anhand einer Detektion der tiefsten Kurve auf der Okklusalfläche, die von mesial nach distal führt, ermittelt wird.

19. Verfahren nach mindestens einem der vorhergehenden Ansprüche, bei dem die erste und/oder zweite und/oder dritte Grenzkurve (12,20,24) manuell definiert oder angepasst wird und/oder bei dem die Mittelfissur bei Seitenzähnen manuell definiert oder angepasst wird.

20. Verfahren nach mindestens einem der vorhergehenden Ansprüche, bei dem jegliche Schichten manuell durch virtuelle Modellierwerkzeuge angepasst werden können.

## Claims

1. A computer-implemented method for defining at least one boundary surface (16) within a digital tooth data model of an artificial tooth element, comprising at least the following steps:
defining a first boundary curve (12) on the tooth surface of the artificial tooth element,
determining, with respect to the first boundary curve, an incisally/ occlusally located tooth surface (14), and
displacing surface areas of said tooth surface (14) inwards towards the surface normal by different amounts in order to produce the at least one boundary surface (16), in particular the first boundary surface (16),
wherein the different amounts of displacement are based on variable design parameters which describe a maximum first displacement of the tooth surface (14) and a first length (22) to define a transition surface (18) extending in incisal direction, wherein the first length (22) defines a transition area starting from the first boundary curve (12),
**characterized in that**
in the case of a first displacement there is no displacement yet for anterior and posterior teeth directly at the first boundary curve (12) and preferably for posterior teeth additionally at the central fissure (40), and wherein the amount of the first displacement towards the surface normal in incisal/occlusal direction increases steadily from the first boundary curve (12) until the maximum first displacement (17) is reached, wherein the first length (22) is set as the design parameter, and the first length is defined starting from zero up to the full first displacement.

2. The method according to claim 1, wherein the tooth surface (14) is divided into several, in particular a plurality of partial surfaces.

3. The method according to claim 2, wherein the partial surfaces are displaced towards the associated surface normal by different amounts to produce the at least one boundary surface (16), in particular the first boundary surface (16).

4. The method according to claim 3, wherein the partial surfaces are displaced to form a particularly reduced closed boundary surface (16).

5. The method according to any one of claims 1-4, wherein the transition surface (18) extends in incisal/occlusal direction.

6. The method according to any one of claims 1-5, wherein the transition surface (18) is formed adjacent to the first boundary curve (12).

7. The method according to any one of claims 1-6, wherein the first boundary curve (12) is projected by the first length (22) in incisal/occlusal direction to define a second boundary curve (20), and
wherein the transition surface (18) is defined between the first and the second boundary curve (18, 20).

8. The method according to any one of claims 1-7, wherein the variable design parameters describe a displacement of the first boundary surface, in which
a third boundary curve (24) is defined by projection of the first or second boundary curve (12, 20) by a second length (26), and
an incisal/occlusal first surface contour (28) is determined as a highest curve on the first boundary surface (16) produced by the first maximum displacement,
on which node points are created, the position of which is fixed on the first surface contour (28), and
wherein a second surface contour (36) is produced by at least partially displacing the node points in apical and/or incisal/occlusal direction and by connecting the at least partially displaced node points,
which defines the maximum second displacement of the first boundary surface (16) in the area of the incisal/occlusal surface contour (28), and
wherein the amount of the second displacement towards the surface normal decreases steadily by a third length in the apical direction for anterior and posterior teeth and also in the direction of the central fissure for posterior teeth, until the third boundary curve (24) or the central fissure (40) is reached at the maximum.

9. The method according to at least one of claims 1-8, wherein the maximum first displacement of the determined tooth surface is 0 to 4.0 mm, and/or wherein the first length has an extension of 0.1 to 10.0 mm.

10. The method according to at least one of claims 8 or 9, wherein for anterior teeth, a boundary (30) of the highest curve on the first and/or second incisal/occlusal surface contour (28, 36) is determined by an angle of the tangent (32) on the incisal surface contour (28, 36) in relation to the tooth axis (34), wherein the angle is 0° to 90°, preferably 10° to 70°, and particularly preferred 40°-50°.

11. The method according to at least one of claims 8-10, wherein the beginning, ending and course of the incisal surface contour (28, 36) is manually defined or adjusted.

12. The method according to at least one of claims 8-11, wherein the positions of the node points on the incisal surface contour (28, 26) of anterior teeth are specified relative to the total length of the incisal surface contour (28, 36).

13. The method according to at least one of claims 8-12, wherein the positions of the node points on the incisal/occlusal surface contour (36) of posterior teeth are specified per cusp relative to the lengths of the cusp ridges between mesial cusp start and the cusp tip or the cusp tip and the distal cusp end, respectively.

14. The method according to at least one of claims 8-13, wherein the displacement of the node points on the incisal/occlusal surface contour (28) in apical direction is in the range of -4.0 to 4.0 mm.

15. The method according to any one of the preceding claims, wherein the tooth element is aligned with respect to the anatomically defined directional terms by geometric analysis of the tooth elements and their comparison with reference geometries.

16. The method according to any one of the preceding claims, wherein the alignment of the tooth element is based on metadata generated when producing the outer contour, and/or wherein the tooth element is aligned manually.

17. The method according to at least one of the preceding claims, wherein the first boundary curve (12) is based on detecting the dental equator as a curve on which at least four node points are described according to the anatomically defined directional terms, which node points are displaced on the tooth surface in apical or incisal/occlusal direction by distances defined relative to the tooth size, and/or wherein the first boundary curve (12) is based on detecting the preparation boundary as a curve on which at least four node points are described according to the anatomically defined directional terms, which node points are displaced on the tooth surface in apical or incisal/occlusal direction by distances defined relative to the tooth size or with respect to the distance to the preparation boundary.

18. The method according to at least one of the preceding claims, wherein the central fissure (40) of posterior teeth is automatically determined by detecting the deepest curve on the occlusal surface leading from mesial to distal.

19. The method according to at least one of the preceding claims, wherein the first and/or second and/or third boundary curve (12, 20, 24) is manually defined or adjusted, and/or wherein the central fissure of posterior teeth is manually defined or adjusted.

20. The method according to at least one of the preceding claims, wherein any layers can be adjusted manually by virtual modelling tools.

## Revendications

1. Procédé, mis en oeuvre par ordinateur, de définition d'au moins une interface (16) à l'intérieur d'un modèle numérique de données de dent d'un élément de denture artificiel, comprenant au moins les étapes de :
définition d'une première courbe limite (12) sur la surface dentaire de l'élément de denture artificiel,
détermination d'une surface dentaire (14) située du côté incisal/occlusal par rapport à la première courbe limite et
déplacement de zones de surface de cette surface dentaire (14) vers l'intérieur, dans la direction de la normale à la surface, de valeurs différentes pour produire ladite au moins une interface (16), notamment de la première interface (16),
les différentes valeurs du déplacement étant basées sur des paramètres de conception variables qui décrivent un premier déplacement maximal de la surface dentaire (14) et une première longueur (22) pour définir une surface de transition (18) s'étendant dans la direction incisale, la première longueur (22) définissant une zone de transition partant de la première courbe limite (12),
**caractérisé en ce que**, pour des dents frontales et latérales à la première courbe limite (12), et de préférence pour des dents latérales aussi à la fissure centrale (40), lors d'un premier déplacement, aucun déplacement n'est effectué et
la valeur du premier déplacement dans la direction de la normale à la surface croissant continuellement, à partir de la première courbe limite (12), dans la direction incisale/occlusale jusqu'à ce que le premier déplacement maximal (17) soit atteint, la première longueur (22) étant déterminée comme paramètre de conception et la première longueur étant définie comme partant de zéro et allant jusqu'au premier déplacement complet.

2. Procédé selon la revendication 1, dans le cadre duquel la surface dentaire (14) est divisée en plusieurs, notamment en un grand nombre de surfaces partielles.

3. Procédé selon la revendication 2, dans le cadre duquel le déplacement des surfaces partielles dans la direction de la normale respective à la surface est effectué par des valeurs différentes pour la production de ladite au moins une interface (16), notamment de la première interface (16).

4. Procédé selon la revendication 3, dans le cadre duquel les surfaces partielles sont déplacées pour former une interface (16) fermée et notamment réduite.

5. Procédé selon l'une des revendications 1 à 4, dans le cadre duquel la surface de transition (18) s'étend dans la direction incisale/occlusale.

6. Procédé selon l'une des revendications 1 à 5, dans le cadre duquel la surface de transition (18) est formée adjacente à la première courbe limite (12).

7. Procédé selon l'une des revendications 1 à 6, la première courbe limite (12) étant projetée de la première longueur (22) dans la direction incisale/occlusale pour définir une deuxième courbe limite (20) et
la surface de transition (18) étant définie entre la première et la deuxième courbe limite (18, 20).

8. Procédé selon l'une des revendications 1 à 7, dans le cadre duquel les paramètres de conception variables décrivent un déplacement de la première interface par lequel une troisième courbe limite (24) est définie par la projection de la première ou de la deuxième courbe limite (12, 20) d'une deuxième longueur (26) et
un premier contour de surface incisal/occlusal (28) est défini comme courbe la plus haute sur la première interface (16) formée par le premier déplacement maximal sur laquelle des noeuds sont formés dont la position est définie sur le premier contour de surface (28) et
un deuxième contour de surface (36) étant formé par un déplacement au moins partiel des noeuds dans la direction apicale et/ou incisale/occlusale et une liaison entre les noeuds au moins partiellement déplacés,
qui définit le deuxième déplacement maximal de la deuxième interface (16) dans la zone du contour de surface incisal/occlusal (28) et
la valeur du deuxième déplacement dans la direction de la normale à la surface pour des dents frontales et latérales dans la direction apicale, et pour des dents latérales également dans la direction de la fissure centrale, décroissant continuellement d'une troisième longueur, jusqu'à ce qu'au maximum la troisième courbe limite (24) ou la fissure centrale (40) soit atteinte.

9. Procédé selon l'une au moins des revendications 1 à 8, dans le cadre duquel le premier déplacement maximal de la surface dentaire déterminée est de 0 à 4,0 mm et/ou dans le cadre duquel la première longueur a une étendue de 0,1 à 10,0 mm.

10. Procédé selon l'une au moins des revendications 8 ou 9, une limite (30) de la courbe la plus haute sur le premier et/ou le deuxième contour de surface incisal/occlusal (28, 36) étant déterminée pour des dents frontales par un angle des tangentes (32) sur le contour de surface incisaI (28, 36) par rapport à l'axe de dent (34), l'angle étant de 0° à 90°, de préférence de 10° à 70°, et de façon particulièrement préférée de 40° à 50°.

11. Procédé selon l'une au moins des revendications 8 à 10, dans le cadre duquel le début, la fin et le parcourt du contour de surface incisaI (28, 36) est défini ou adapté manuellement.

12. Procédé selon l'une au moins des revendications 8 à 11, dans le cadre duquel les positions des noeuds sur le contour de surface incisaI (28, 36) de dents frontales sont indiquées par rapport à la longueur totale du contour de surface incisaI (28, 36).

13. Procédé selon l'une au moins des revendications 8 à 12, dans le cadre duquel les positions des noeuds sur le contour de surface incisal/occlusal (36) de dents latérales sont indiquées par cuspide par rapport aux longueurs des cimes de cuspide entre le début mésial de cuspide et la pointe de cuspide ou entre la pointe de cuspide et la fin distale de cuspide.

14. Procédé selon l'une au moins des revendications 8 à 13, dans le cadre duquel le déplacement des noeuds sur le contour de surface incisal/occlusal (28) est effectué dans la direction apicale dans la plage de -4,0 à 4,0 mm.

15. Procédé selon l'une au moins des revendications précédentes, dans le cadre duquel l'orientation de l'élément de denture par rapport aux désignations de direction anatomiquement définies est effectuée par une analyse géométrique des éléments dentaires et la comparaison de celle-ci à des géométries de référence.

16. Procédé selon l'une au moins des revendications précédentes, dans le cadre duquel l'orientation de l'élément de denture est basée sur des métadonnées qui ont été produites lors de l'établissement du contour extérieur et/ou dans le cadre duquel l'orientation de l'élément de denture est effectuée manuellement.

17. Procédé selon l'une au moins des revendications précédentes, dans le cadre duquel la première courbe limite (12) est basée sur la saisie de l'équateur dentaire en tant que courbe sur laquelle au moins quatre noeuds sont décrits conformément aux désignations de direction anatomiquement définies, qui sont décalés sur la surface dentaire dans la direction apicale et/ou incisale/occlusale de distances définies par rapport à la taille de la dent, et/ou dans le cadre duquel la première courbe limite (12) est basée sur la saisie de la limite de préparation en tant que courbe sur laquelle au moins quatre noeuds sont décrits conformément aux désignations de direction anatomiquement définies, qui sont décalés sur la surface dentaire dans la direction apicale et/ou incisale/occlusale de distances définies par rapport à la taille de la dent ou par rapport à la distance de la limite de préparation.

18. Procédé selon l'une au moins des revendications précédentes, dans le cadre duquel la fissure centrale (40) est déterminée automatiquement pour des dents latérales sur la base d'une détection de la courbe la plus basse sur la surface occlusale allant de mésial à distal.

19. Procédé selon l'une au moins des revendications précédentes, dans le cadre duquel la première et/ou la deuxième et/ou la troisième courbe limite (12, 20, 24) est définie ou adaptée manuellement et/ou dans le cadre duquel la fissure centrale est définie ou adaptée manuellement pour des dents latérales.

20. Procédé selon l'une au moins des revendications précédentes, dans le cadre duquel toutes les couches peuvent être adaptées manuellement moyennant des outils de modelage virtuels.
